# EUROPEAN PATENT APPLICATION

(11) **EP 4 159 691 A1**
(43) Date of publication of application: **05.04.2023**
(21) Application number: 22020460.6
(22) Date of filing: 28.09.2022
(51) Int. Cl.: C02F 3/08, C02F 3/30, C02F 3/12

(54) **COMBINED REACTOR FOR WASTEWATER TREATMENT**

(30) Priority: 04.10.2021 ES 202130925
(71) Applicant: Acai Depuracion S.L., 22400 Monzon (Huesca) (ES)
(72) Inventor: SALAMERO RIBES, Javier, 22400 Monzon (Hueca) (ES)
(74) Representative: De Castro Hermida, José Luis

(57) **Abstract**

Combined reactor for water purification that combines suspended sludge with biodisc technology, working as an IFAS (Integrated Fixed-Film Activated sludge) process, by means of a single device that integrates an anoxic tank equipped with mixing and a biodisc reactor located on it, for nitrogen removal from the wastewater by simultaneous nitrification/denitrification process carried out in a single device.

This device has the advantage that, by using a single reactor, the space occupied is much smaller, requiring approximately the half of the surface that a conventional biodisc requires, thus reducing investment costs, and it obtains a much higher operating performance with lower energy consumption and shorter operating time, with the consequent economic savings and consequently lower operating costs.

## Description

This combined reactor for water purification combines suspended sludge with the biodisc technology, working as an IFAS (Integrated Fixed-Film Activated sludge) process, by means of a single device that integrates an anoxic tank equipped with mixing and a biodisc reactor located on it, for nitrogen removal from the wastewater by simultaneous nitrification/denitrification process carried out in a single device.

### TECHNICAL FIELD

The invention falls within the field of devices for water purification, and more specifically those intended for the wastewater nitrogen removal.

### BACKGROUND OF THE INVENTION

At present, various technologies are known for water purification, especially for nitrogen removal contained on it. Among the most used ones we can cite the following:

### Activated sludge technology for N removal

Biological nitrogen removal processes based on activated sludge technology work with suspended biomass (bacteria) and have a separate zone or reactor for the anoxic denitrification, that uses the influent BOD (biochemical oxygen demand), followed by another aerated reactor/zone for nitrification and with an internal recirculation of nitrates.

The activated sludge present in the reactors, which contains a relatively high concentration of suspended solids (3-4g/L), is conducted to a secondary clarifier to separate those solids, so that the clarified supernatant at the top constitutes the target effluent water and the bottom thickened sludge is recirculated to the reactors to maintain high concentrations of biomass. There is also a sludge wastage flow to keep the suspended solids concentration relatively constant.

The geometric configuration can use either continuous reactors separated by partitions or without partitions, such as oxidation ditches and carousels in which the aerobic, anoxic and, when appropriate, anaerobic zones are generated naturally, through aeration in a small area and circulation of activated sludge with a relatively high speed along one or several rings where oxygen is first consumed, generating a later anoxic zone for denitrification and, in the best of cases, a subsequent anaerobic zone without nitrate that facilitates the elimination of phosphorus. However, in many cases, an anaerobic reactor zone is required prior to the oxidation ditch.

### Trickling filters technology for bacterial beds (TF)

It is a very old technology that is based on the growth of biomass in a bed with fixed supports-pieces of stone or plastic, generating a biofilm that is capable of biodegrading organic matter and, if needed, also nitrifying the ammonium from a previously settled wastewater, thanks to the fact that it is distributed from the top of the bed and it percolates on the biofilm. There is a detachment of biomass from the biofilm to the liquid, so it contains a relatively high concentration of suspended biomass which requires for its separation, a final secondary settler. In this case, there is not a recirculation of the thickened sludge because the bed would clog.

To achieve nitrification, it is required to design and operate with a very low BOD load, so that in the upper half of the biofilter the BOD is removed and in the lower part, which is already without BOD, nitrifying bacteria can grow. Also, two biofilters can be used in series, the first one to remove BOD with moderate loads and the second one ( with almost no incoming BOD) to achieve nitrification.

Pre-denitrification in biofilm, as in an activated sludge process, is not feasible with biofilters. To achieve denitrification, it was formerly proposed to recirculate the nitrates generated in a nitrifying trickling filter, to a previous tank where the influent water and the recycled sludge from the settler arrive to denitrify in suspension as in a conventional activated sludge. However, this requires a post settler to prevent the entry of suspended solids to the trickling filter, whose surface must be very large because it is subjected to a very high hydraulic load due to the use of sludge recirculation and, especially, from internal recirculation.

Since a previous separation of the suspended solids is always required to prevent the biofilter from clogging, to achieve denitrification a decanter - digester or a septic tank or imhoff cone can be used, which acts as a clarifier-digester for smaller populations, to which the nitrate generated in a subsequent nitrifying biofilter is recycled. However, this is considered to present the following important limitation: given its high HRT, in the clarifier-digester it will be also produced an anaerobic acidogenesis with formation of volatile fatty acids (VFA) and, probably a methanogenesis with methane generation, which in part will be in gaseous state and partly will be dissolved in the liquid. Therefore, the outlet liquid of this tank, which will have a relatively high flow rate due to recirculation, will contain a concentration of suspended solids that will depend on the degree of clarification in the tank, and, in addition, a BOD associated with volatile fatty acids and the dissolved methane. These components can lead to clogging of the trickling filter and/or heterotrophic biomass generation which, as it is known, will lead to the reduction of nitrification rates.

### Reactor with plastic moving beds (MBBR Moving Bed Biofilm Reactor)

It is also a technology with biomass in biofilm, but, in this case, it is based on the use of generally cylindrical pieces of high-density polyethylene of 1-3 cm in diameter, with internal walls in the form of a honeycomb where the biofilm grows. These pieces are placed in a reactor-tank filling approximately 50% of its volume and where the water to be treated passes though the pieces which are in permanent movement thanks to the existing aeration. Thus, it produces contact between water, biofilm and dissolved oxygen, which must reach a high value of about 4mg/L, so that the biodegradation of organic matter and nitrification can occur using reactors in series: in the first one, only the biodegradation of organic matter will occur, in the second one, there may be some nitrification and in the third only nitrification. In the latest reactor, high daily nitrification rates are reached, in the order 0.8gN/m2, which are greater than in an activated sludge process with suspended biomass thanks to the fact that the concentration of nitrifying biomass that can be reached in the biofilm is very high.

To achieve denitrification, a mixed anoxic reactor is used, also filled with moving beds, located before the aerated reactors, in which the settled water enters together with an internal recirculation of nitrates from the last aerated reactor. In this way, all the dissolved BOD and a small part of the suspended BOD are removed, using nitrates instead of oxygen (denitrification). However, it must be highlighted that the denitrification rate is relatively low due to the high oxygen transfer in the internal recirculation and to the low concentration of dissolved BOD that normally is present in urban wastewater. For all these reasons, a post reactor is usually used for denitrification fed with external methanol and located after the aerated reactors.

In the context of the progress made in medium-large WWTPs, it is worth highlighting that the trend is to add plastic moving beds only to the aerated areas of the activated sludge process, so that nitrification occurs mainly in the moving bed biofilm and denitrification and, where appropriate, removal of phosphorus with suspended biomass, in anoxic and anaerobic reactors prior to the aerobic ones, in the same way as in a conventional activated sludge process. Therefore, for this purpose decoupling of functions between biofilm and suspended biomass has been called the IFAS (Integrated Film and Activated Sludge) concept.

### Biodisc technology (RBC - Rotating Biological Contactors)

It is also a technology with biomass in biofilm, but in this case the support is a disc of polyethylene surface that rotates, being half of its surface submerged in a tank through which the water to be treated passes. The raw water first passes through a primary clarifier or septic tank and then comes in contact with the biodisc. It impregnates, by diffusion, with the organic matter of the water and, where appropriate, with ammonium. When the biodisc surface comes out and gets in contact with the atmospheric air, a high oxygen transfer to the biofilm, so that the biodegradation of organic matter and, where appropriate, ammonium nitrification to nitrate takes place.

Just as in percolating filters, there is a release of biomass that detaches to the liquid, so that the liquid contains moderate concentrations of suspended solids, so its separation is required by means of a final secondary clarifier or lamellar settling. To achieve efficient nitrification, it is recommended to use three blocks of biodiscs in series, so that in the first one only the biodegradation of organic matter occurs, in the second one there may be some nitrification and in the third one only nitrification.

To achieve nitrate denitrification, the literature basically shows these alternatives:
- The oldest is the recirculation of nitrate to a previous denitrification tank, similarly to what happens with percolating filters, using a reactor with suspended biomass and a post-settler prior to the biodisc or a settler-digester. The limitations of this configuration have already been discussed, although, in the case of biodisks, there is an advantage because there is no clogging problem as in the trickling filter, but there is that of the incoming BOD due to high recirculation and lack of mixing. Therefore, it is necessary to oversize the biodiscs or to use two blocks in series in order to guarantee a efficient nitrification.
- Subsequently, the recirculation of nitrate to a fixed bed or moving bed reactor was used. The most recent is the recirculation of nitrate to the inlet to achieve the denitrification in a pre-denitrifying biodiscs that may be submerged more than normally to minimize oxygen transfer. These approaches are based on the concept used earlier in MBBR technology and is therefore considered to have the same limitation, that is: the rates that can be achieved are relatively low.

We can find documents that protect a reactor with suspended biomass and a post settler prior to the biodisc, such as patent US4692250A "Simultaneous C and N bio-oxidation with multi-stage RBC recycling". Also, they use reactors with moving bed supports, such as patent ES 2340653B1 "Wastewater purification process", or settler-digester, such as the patent CN103663732 "Integrated RBC equipment for enhancing denitrification and treating excess sludge in situ". Likewise, applications are known on technologies with recirculation of nitrates to a primary clarofier to achieve denitrification in pre-denitrifying biodiscs, such as patent CN205838653U "Intelligence rotation biological denitrification reactor".

The IFAS process is also widely described, for example in patent WO2020263786 "System and process for removing ammonium from a wastewater stream".

Of course, combinations with biodisc technology are also known, such as example ES2328777 "Biodisc treatment plant" or ES2346388 "Device for biodiscs for a wastewater treatment reactor", but it is not known in the state of the art no system that combines in a single device the nitrification in biodiscs with the denitrification process in suspension, that is, IFAS operation.

### EXPLANATION OF THE INVENTION

To solve the technical problem of the need for separate equipments and tanks for each process, with high energy consumption and long process time, this invention aims to improve the current state of the art, consisting of a combined reactor for water purification, which includes:
- an anoxic tank with at least one inlet and one outlet for the water to be treated, which contains heterotrophic sludge in suspension,
- a biodisc reactor located on the anoxic tank, partially submerged below the upper level of the water to be treated, connected in parallel with a horizontally arranged axis of rotation that relates them to means of rotation, with the biodisc reactor preferably protected by its upper part with a cover, and
- one or more mixers of the sludge in suspension inside the anoxic tank, in its bottom.

The combined reactor for water purification also includes solenoid valves and flow sensors at each inlet and outlet, electrically associated with a control module. This control module can optionally be equipped with means of communication and transmission of data that allow both the remote control and the information of the system performance.

The turning means of the mixers(s) can be independent or be the same as the biodiscs and, work in a mechanically synchronized way. The means of rotation are of variable speed and adjustable from the control module.

At the outlet of the combined reactor for water purification there is a secondary settler, equipped with an outlet for the already purified water, and whose outlet of sludge is connected to the reactor inlet by a recirculation of sludge, and with a sludge wastage outlet.

The inlet of the combined reactor for water purification is connected to a pretreatment of the wastewater water to be treated, consisting of a homogenization tank with mixing, being able to optionally incorporate a primary settler, placed after the pre-treatment of the residual water to be treated and before the entrance.

The combined reactor for water purification can optionally be complemented with auxiliary equipment for the removal of phosphorus and other contaminants that could be present in the water.

This combined reactor for water purification involves a purification procedure characteristic that includes a nitrification-denitrification stages in which two processes are carried out simultaneously and in the same reactor in the water to be treated:
- nitrification, occurs in the biodisc reactor (in the biofilm), through its controlled rotation,
   converting the ammonium present in the water to be treated into nitrate, through the effect of aerobic bacteria forming a biofilm on the biodiscs,
- denitrification, occurs in the anoxic tank, where heterotrophic bacteria in the absence
   of oxygen (anoxia) use nitrates from the nitrification process above, as an electron acceptor in the oxidation of carbon compounds (COD) resulting in N₂ (gas), CO2 (gas) and H₂O (liquid).

This procedure may also comprise, after the nitrification-denitrification stage, a sludge settling stage, in the secondary settler, obtaining at its exit, on the one hand, already purified water, and on the other hand, sludge that, in part, is fed back to the reactor inlet through the sludge recirculation conduit, and the rest is discarded through the sludge wastage. The system includes a recirculation of sludge separated in the settler towards the anoxic reactor, to ensure a minimum concentration of bacteria in the denitrification process.

This process may also need, before the nitrification-denitrification stage, a pretreatment stage of the wastewater to be treated, and also optionally, a settling stage in the primary settler, between the stage of wastewater pretreatment and the nitrification-denitrification stage.

This invention has the following advantages in relation to the previous state of the art:
- the surface of the biodisc that is required in this process represents approximately the half of the surface that a conventional biodisc requires, since in a conventional biodisc it is required a biodisc to remove carbon and a biodisc to nitrify, while in this combined reactor the biodisc is required only for nitrification. These savings in biodisc surface translates into approximate investment costs of 50%.
- allows to combine suspended sludge with biofilm technology (IFAS), with biodiscs for the removal of nitrogen, achieving the process of nitrification/denitrification simultaneously and in a single device.
- by using a single reactor, the space occupied is much smaller, with the consequent economic savings to manufacture.
- when the nitrification/denitrification process is carried out simultaneously, the saving of time is remarkable, with a HRT (Hydraulic Retention Time) that is in the order of 4-8 hours, much less than with existing technologies today.
- by applying the biodiscs in the combined nitrification/denitrification process, it is avoided the need for expensive air injections common in current IFAS technology, achieving energy savings of several orders of magnitude, which results in a better economic profitability and lower operating cost.
- This invention is capable of being applied both by building by means of civil Works carried out in situ, for example with concrete tanks, such as implementing elements housed in containers and pre-fabricated with metallic or plastic elements, which will give place to a pre-fabricated plant more suitable for small populations.
- It can also be applied to expand existing plants, either from traditional biodiscs or for activated sludge, which require expanding their capacities
- It can be complemented with auxiliary equipment for the elimination of phosphorus and other contaminants that may be present in the water.
- the nitrifying biodiscs, being semi-submerged above the anoxic tank itself, do not require internal recirculation for the transfer of the nitrates generated in the biodiscs to the mixed liquor. In addition, the biodiscs, as they rotate slowly, minimize the transfer of oxygen, so that the anoxic conditions necessary for the practically complete removal of BOD through the denitrification with biomass in suspension can occur.
- the reactor can operate with raw water, so the BOD available for denitrification in suspension is very high, achieving a very high denitrification rate.
- the necessary dimensioning of the biodiscs is exclusively for nitrification, so the necessary area and the weight of the biodiscs is sensibly lower, which allows to improve the investment costs and operational robustness.
- the HRT and the surface required is much lower than in currently known techniques, such as activated sludge, percolating filters and MBBR/IFAS.
- the operation is as simple as in any other technology, not requiring learning.
- the consumption of oxygen and energy, as well as the operating costs, are much lower than in the currently known technologies such as activated sludge, MBBR-IFAS and trickling filters.
- the impact of smells, noise and visual are also lower than in most techniques currently known.
- The production of sludge and its stability is lower than in the current MBBR-IFAS technique.
- The sedimentability of the sludge is better than in the current activated sludge technique.
- the nitrification capacity is significantly higher than the rest of current technologies.
- the denitrification capacity is greater than in the current MBBR-IFAS technique and much greater than in trickling filters.
- The robustness against variability peaks is notably superior to the rest of the technologies.

### BRIEF DESCRIPTION OF THE DRAWINGS

To complement the description that is being made and to help for a better understanding of the characteristics of the invention, it is attached as part of the mentioned description, a set of drawings for illustrative purposes in which the following has been represented:

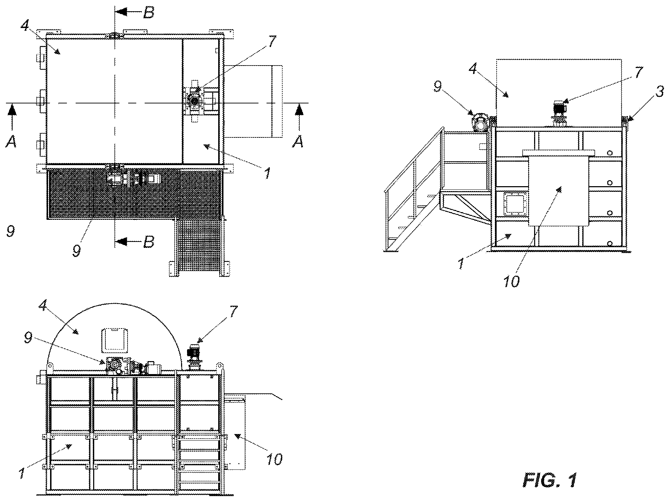

Figure 1.- Shows elevation, plant and profile views of the device of the invention, indicating some sections in the plant view.

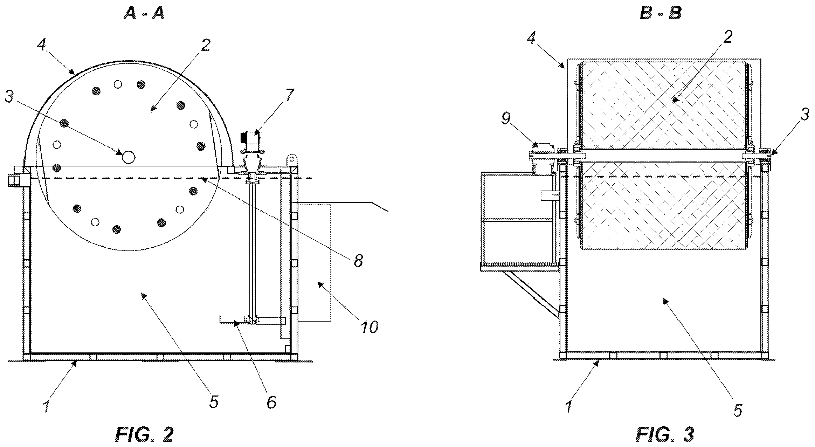

Figure 2.- Shows a cross-sectional view of the device of the invention.
Figure 3.- Shows a longitudinal section view of the device of the invention.

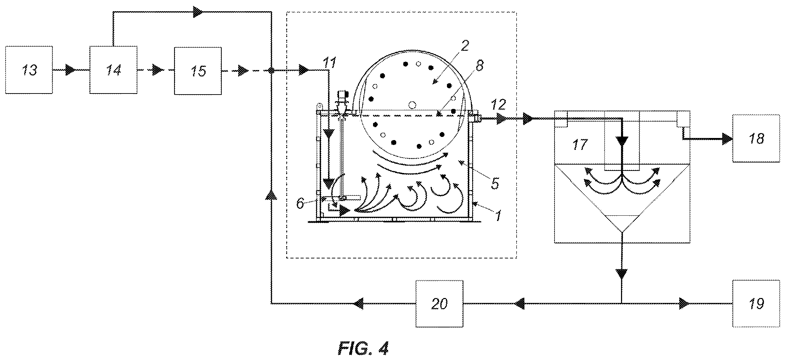

Figure 4.- Shows a block diagram of a water treatment plant using the device of the invention and showing the flow through the different items.

### PREFERRED MODE OF THE INVENTION

The characteristics of the present invention will be better understood with the following
preferred mode of the combined reactor for water purification, which, in view of the drawings, we can see that it includes:
- an anoxic tank (1) equipped with at least one inlet (11) and one outlet (12) for the water to be treated (5), which contains sludge in suspension,
- a biodisc reactor (2) located in the anoxic tank (1), partially submerged below the upper level (8) of the water to be treated (5), joined in parallel to a horizontally arranged axis of rotation (3) that relates them to turning means (9), being the biodisc reactor (2) preferably closed in its upper part by a protective cover (4), and
- one or more mixers (6) of the sludge in suspension inside the anoxic tank (1), at its bottom.

The mixer(s) (6) are preferably equipped with independent turning means (7) of the turning means (9) of the biodiscs, although an alternative configuration of the invention is planned in which the mixer(s) (6) are mechanically related to the turning means (9) of the biodiscs, operating in a mechanically synchronized manner.

The combined reactor for water purification also includes solenoid valves and flow sensors at each inlet (11) and at each outlet (12), electrically associated with a control module (10). This control module (10) can be optionally equipped by means of communication and data transmission that allow both control and information remotely.

The turning means (9) of the biodiscs are preferably a geared motor. The media of rotation (9), and the means of rotation (7) where appropriate, are of variable speed and adjustable from the control module (10) and can be regulated according to the characteristics of the water to be treated.

At the outlet (12) of the combined reactor for water purification there is a secondary settler (17), equipped with an outlet for the already purified water (18), and whose sludge outlet is connected to the anoxic reactor, preferably through the inlet (11) of the reactor through a sludge recirculation conduit (20), and with a wastage outlet of sludge (19).

The inlet (11) of the combined reactor for water purification is connected to a pretreatment (14) of the residual water (13) to be treated, preferably consisting of a homogenization tank with mixing, being able to optionally incorporate a primary clarifier (15), placed after the pretreatment (14) of the residual water to be treated (13) and before entry (11). The homogenizing tank is an option that helps the process to be more constant due to the lamination of variable flows and concentrations. The system can work directly with pretreated water.

The combined reactor for water purification can optionally be complemented with auxiliary equipment for the removal of phosphorus and other products that could be present in the water.

This combined reactor for water purification involves a characteristic water purification procedure that includes a nitrification-denitrification stage in which the two processes are carried out simultaneously and in the same reactor in the water to be treated (5):
- nitrification, in the biodisc reactor (2), by means of its controlled rotation, converting the ammonium present in the water to be treated into nitrate, through the effect of a biofilm of aerobic nitrifying bacteria that grows on the biodiscs,
- denitrification, in the anoxic tank (1), where the heterotrophic bacteria in absence of oxygen (anoxia) use nitrates from the process of prior nitrification, as an electron acceptor in the oxidation of carbon compounds (COD) resulting in N₂ (gas), CO2 (gas) and H₂O (liquid).

This procedure may also require, after the nitrification-denitrification stage, a sludge settling stage, in the secondary settler (17), obtaining at its outlet, on the one hand, already purified water (18), and on the other hand, sludge that, in part is fed back to the inlet (11) of the reactor through the recirculation conduit of sludge (20), and the rest is discarded through the sludge wastage outlet (19).

This process may also require, before the nitrification-denitrification stage, a pretreatment stage (14) of the residual water (13) to be treated.

This procedure may also need a decantation stage in the decanter (15), between the pretreatment stage (14) of the residual water (13) and the stage of nitrification-denitrification.

The effectiveness of this combined reactor and its operating procedure has been proven experimentally, allowing to combine sludge in suspension with the technology of biodiscs for nitrogen removal in an IFAS process. Thus, the residual water enters the system and will optionally pass through a homogenization tank, which is mixed and guarantees a robust operation of the system, compensating the variability of the flow of residual water from small towns.

After the homogenization, the water passes, either through one or more pumps or by gravity, to the combined reactor for water purification, which performs the nitrification/denitrification. The nitrification process, that is, the transformation of ammonium in nitrate, takes place in the biofilm of the biodisc reactor (2), which will rotate in a continuous mode semi-submerged above the anoxic tank (1), so that part of the disc is submerged and can adsorb the ammonium present in the water and another part is in contact with oxygen from outside the tank, favoring the oxidation reaction necessary for nitrifcation. The biofilm on the biodiscs (2) contains mainly nitrifying biomass, which does not suffer the inhibition generated by the competitive growth of heterotrophic biomass. The heterotrophic biomass grows mainly in the mixed activated sludge liquor in suspension, contained in the anoxic tank (1) located under the biodisc, which is mixed to promote denitrification with denitrifying heterotrophic biomass, that is, the anoxic biodegradation of the organic matter of the raw influent water, thanks to the nitrate that will be transferred to the activated sludge from the biofilm of the biodisc in its rotation.

This anoxic tank (1) replaces the tank typically used with biodiscs but has a larger volume and allows the activated sludge to be recirculated from the bottom of the secondary clarifier (17) to maintain a high concentration of suspended solids (3-5g/L) and denitrifying biomass in the activated sludge-mixture. It is available a sludge wastage outlet (19) to control the suspended solids concentration by means of a sludge recirculation conduit (20) to the anoxic tank (1). Therefore, the nitrification and denitrification occur simultaneously in a single very compact reactor, with a HRT which is in the order of 4-8 hours.

Subsequently, and optionally when necessary, the chloride iron coagulant is dosed, preferably at the exit of the biodisc before the clarifier, to achieve the removal of phosphorus by precipitation of ferric phosphate, which will be adsorbed to the activated sludge mixed liquor and sent to the secondary clarifier, where the effluent clarified water will be separated from the thickened sludge, which will be recirculated in part to the anoxic reactor, and another part will be wasted, which is where phosphate is removed from the system.

This invention is capable to be applied in industrial applications, both being built by means of civil construction in situ, for example with concrete tanks, such as implanting elements housed in containers, and prefabricated with metallic elements, which will give rise to a prefabricated plant.

## Claims

1. Combined reactor for water purification that comprises:
- an anoxic tank (1) equipped with at least one inlet (11) and one outlet (12) for
the water to be treated (5), which contains sludge in suspension,
- a biodisc reactor (2) located on the anoxic tank (1), partially submerged below the upper level (8) of the water to be treated (5), joined in parallel to a horizontally arranged axis of rotation (3) that relates them to turning means (9), and
- one or more mixers (6) of the sludge in suspension inside the anoxic tank (1),
at its bottom.

2. Combined reactor for water purification according to claim 1, **characterized in that** the agitator or agitators (6) are provided with means of rotation (7) independent of the turning means (9) of the biodiscs.

3. Combined reactor for water purification according to claim 1, **characterized in that** the agitator(s) (6) are mechanically related to the turning means (9) of the biodiscs.

4. Combined reactor for water purification according to any of the preceding claims, **characterized in that** it comprises solenoid valves and pressure sensors at each input (11) and at each output (12), electrically associated with a checking module (10).

5. Combined reactor for water purification according to any of the previous claims, **characterized in that** the turning means (9) of the biodiscs are a gearmotor.

6. Combined reactor for water purification according to any of the preceding claims, **characterized in that** the turning means (9), and the turning means (7) when appropriate, are of variable speed and adjustable from the control module (10).

7. Combined reactor for water purification according to any of the previous claims, **characterized in that** at the outlet (12) there is a secondary decanter (17), equipped with an outlet for the already purified water (18), and whose sludge outlet is connected to the inlet (11) of the reactor by means of a sludge recirculation (20), and with a sludge wastage outlet (19).

8. Combined reactor for water purification according to any of the preceding claims, **characterized in that** the input (11) is connected to a pretreatment (14) of the residual water (13) to be treated consisting of a tank of homogenization with agitator.

9. Combined reactor for water purification according to claim 8, **characterized in that** the inlet (11) is connected to the outlet of a primary decanter (15), placed after pretreatment (14) of the residual water (13) to be treated.

10. Water purification procedure in a combined reactor according to the previous claims, **characterized in that** it comprises a nitrification-denitrification stage in which two processes are carried out simultaneously and in the same reactor in the water to be treated (5):
- nitrification, in the biodisc reactor (2), by means of its controlled rotation, converting the ammonium present in the water to be treated into nitrate, through the effect of a biofilm of aerobic bacteria that grows on the biodiscs,
- denitrification, in the anoxic tank (1), where the heterotrophic bacteria in absence of oxygen (anoxia) use nitrates from the process of prior nitrification, as an electron acceptor in the oxidation of carbonaceous compounds (COD) resulting in N₂ (gas), CO2 (gas) and H₂O (liquid).

11. Water purification procedure in a combined reactor according to claim 10, **characterized in that** after the nitrification-denitrification stage a sludge settling stage is carried out in the secondary decanter (17), obtaining at its outlet, on the one hand, already purified water (18), and on the other hand, sludge that, in part, is fed back to the inlet (11) of the reactor through the sludge recirculation conduit (20), and the rest is discarded through the sludge wastage outlet (19).

12. Water purification procedure in a combined reactor according to any of claims 10 and 11, **characterized in that** before the nitrification-denitrification stage, a pretreatment stage (14) of the residual water (13) to be treated is carried out.

13. Water purification procedure in a combined reactor according to claim 12, **characterized in that** a settling stage is carried out in the primary decanter (15), between the pretreatment stage (14) of the residual water (13) and the nitrification-denitrification stage.
